# EUROPEAN PATENT SPECIFICATION

(11) **EP 2 070 315 B1**
(45) Date of publication and mention of the grant of the patent: **28.05.2014**
(21) Application number: 07838996.2
(22) Date of filing: 28.09.2007
(51) Int. Cl.: H04N 5/445

(54) **SYSTEMS AND METHODS FOR A MODULAR MEDIA GUIDANCE DASHBOARD APPLICATION**
SYSTEME UND VERFAHREN FÜR EINE MODULARE MEDIENFÜHRUNGS-ARMATURENANWENDUNG
SYSTÈMES ET PROCÉDÉS POUR APPLICATION DE TABLEAU DE BORD DE GUIDAGE MULTIMÉDIA MODULAIRE

(30) Priority: 29.09.2006 US 541299
(43) Date of publication of application: 17.06.2009
(60) Divisional application: 14165562.1
(73) Proprietor: United Video Properties, Inc., Santa Clara, CA 95050 (US)
(72) Inventor: SHANNON, Steve, Pacific Palisades, California 90272 (US); KELLOGG-SMITH, Peter, Issaquah, Washington 98027 (US)
(74) Representative: Korenberg, Alexander Tal
(86) International application number: PCT/US2007/020943
(87) International publication number: WO 2008/042267

(56) References cited:
- WO-A-00/28733
- WO-A-02/052540
- WO-A-2004/008739
- US-A1- 2002 091 697
- US-A1- 2004 078 814
- US-A1- 2005 028 206

## Description

### Priority Claim

This application claims the benefit of U.S. Patent Application No. 11/541,299, filed September 29, 2006.

### Background of the Invention

This invention relates to interactive media guidance applications, and more particularly, to modular media guidance dashboard applications that provide a customizable modular interactive user interface that may be effective across multiple platforms to create a common interface for media guidance.

Typical interactive media guidance applications provide access to different types of media content dispersed among a number of different media display screens. Moreover, the media content on each media display screen, as well as the arrangement of the content, is fixed by the media guidance applications and is not customizable by the users. Hence, in many embodiments, a user has to navigate among many screens and listings before the user locates his or her desired content item and is limited to the display screens provided by the media guidance application. As media content offered through typical interactive media guidance applications increases, navigation time spent by an average user in locating a desire content item would only increase. Hence, the lack of configurability and personalization of typical interactive media guidance applications is a hindrance to the usability of these applications.

Typical interactive media guidance applications are not configured to be compatible with multiple devices and platforms. Consequently, media information presented to a user may be in a confusing format if the user accesses the media guidance applications on a platform that is incompatible with the platform for which the information is configured. Hence, the lack of adaptability of typical interactive media guidance applications to their underlying platform architecture is a hindrance to the versatility of these applications.

In view of the forgoing, it would be desirable to provide a modular media guidance dashboard application for delivering configurable, modular, and personalized media guidance to individual users. The modular media guidance dashboard would also create a unified interface through which customized guidance information may be accessed by a user from a variety of media platforms. By offering such targeted services to users, the dashboard application would complement and extend the usability and versatility of the existing electronic program guides.

WO0028733 discloses an on-line scheduling application which allows users to personalise how television related, entertainment related and social event related information is provided. Users may select one or more sources from which the information is obtained and one or more delivery schemes that the application uses to provide the information. Users may define one or more television requests based on e.g. title, words, actor, genre, start time, day of the week, rating or channel.

W002052540 discloses a custom hand held system to enable a user to enact and review media choices through wireless control of media playing devices by a hand held device, and to present media directories on the display of the hand held device.

WO2004/008739 discloses a receiver comprising electronic program guide means for browsing through an electronic program guide containing information on a plurality of program channels. The electronic program guide means comprise a server module and a number of client modules assigned to a number of remote devices.

US2005/0028206 discloses a computer software application for end to end management of the delivery of IP-configured integrated multimedia signals (e.g. TV, video, website etc) on an interactive basis to a subscriber device. A system manager comprises an interactive program guide component configured for providing to the subscriber an interactive program guide permitting selection of multimedia signals by the subscriber.

US2004/078814 discloses a module-based ticker for an interactive television system, which comprises one or more modules of content that the user can select for presentation.

US 2002/091697 discloses a network of servers coupled to the Internet to provide a virtual desktop in a virtual computing environment. A user is able to access the virtual desktop from a variety of systems through various communications links.

### Summary of the Invention

The present invention provides a modular media guidance dashboard application that provide a unified interface across multiple media platforms through which personalized media guidance may be delivered. This media guidance dashboard is also adapted to present personalized media guidance in a modular fashion so that modular information retrieval may be enabled. The various features and functionalities of the modular media guidance dashboard application would thus enhance the overall media guidance experience of its users.

The present invention provides systems and methods for a modular media guidance dashboard application in which media information is displayed within two or more media modules. In particular, each module provides different types of content in different configurations. Certain modules provide content listings in a video mosaic display. Certain modules provide content listings in a grid display. These listings may be for linear programming, non-linear programming, or a combination thereof. The modules may be further organized into various tabs where each tab provided the user with ready access to different types of content in a single display screen.

In addition, the types and layout of the various modules and tabs of the dashboard application may be customized to create a personalized "experience" for a user. In some embodiments, the user chooses his or her desired tabs and modules directly from the dashboard application display. In some embodiments, modules and tabs are suggested to the user by the dashboard based on learned user viewing preferences. In some embodiments, default modules and tabs are provided to the user by the dashboard based on learned user viewing preferences, and the user may later choose to modify the default setting. In some embodiments, the aesthetic "look" of the dashboard may be altered by the user to suit his or her preference.

The media content listed within each module of the dashboard application may also be customized. Dashboard customization may be provided by a user, automatically complied by the dashboard based on monitored user viewing behavior and/or obtained from related media guidance applications. Learned user viewing behavior may be analyzed by the dashboard to suggest program listings, modules and/or tabs that would capture the learned behavior. In addition to making suggestions for linear programs on a scheduled basis, the dashboard application is also able to suggest non-linear programs such as popular or highly rated on-demand content items. The content of each module may be regularly updated to reflect one or more changes in the user viewing habits.

Furthermore, the dashboard application may be customized to suit a particular media content theme chosen by the user. Hence, listings displayed from the theme-centric dashboard are likely to refer to media content that is governed by the same theme as the dashboard.

The dashboard application provides a unified interface through which the same personalized content listings may be accessed by a user via devices such as a personal computer, a television, or a mobile device. The display format for the dashboard application is adaptable in order to be compatible with its underlying architecture and to facilitate user navigation through the media guidance dashboard application.

### Brief Description of the Drawings

FIG. 1 illustrates an exemplary media guidance application in a grid display.
FIG. 2 illustrates an exemplary media guidance application in a video mosaic display.
FIG. 3 illustrates an exemplary television-based modular media guidance dashboard application.
FIG. 4 illustrates an exemplary modular media guidance dashboard application having a children-related theme.
FIG. 5 illustrates an exemplary web-based modular media guidance dashboard application.
FIG. 6 provides an illustrative user equipment device for the media guidance dashboard application of the present invention.
FIG. 7 provides an illustrative system implementation of the user equipment device of FIG. 6.
FIG. 8 provides an illustrative flow chart of the steps involved in providing a modular media guidance dashboard application effective across multiple platforms.
FIG. 9 provides another flowchart of illustrative steps involved in providing a modular media guidance dashboard application.
FIG. 10 provides an illustrative flow chart of the steps for customizing the media content of a media guidance dashboard application of the present invention.
FIG. 11 provides another illustrative flow chart of the steps for customizing the media content of a media guidance dashboard application of the present invention.
FIG. 12 provides yet another illustrative flow chart of the steps for customizing the media content of a media guidance dashboard application of the present invention.
FIG. 13 provides an illustrative flow chart of the steps for customizing the layout of a media guidance dashboard application of the present invention.

### Detailed Description of the Preferred Embodiments

The amount of media available to users in any given media delivery system can be substantial. Consequently, many users desire a form of media guidance through an interface that allows users to efficiently navigate media selections and easily identify media that they may desire. An application which provides such guidance is referred to herein as an interactive media guidance application or, sometimes, a media guidance application or a guidance application.

Interactive media guidance applications may take various forms depending on the media for which they provide guidance. One typical type of media guidance application is an interactive television program guide. Interactive television program guides (sometimes referred to as electronic program guides) are well-known guidance applications that, among other things, allow users to navigate among and locate many types of media content including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), and other types of media or video content. Guidance applications also allow users to navigate among and locate content related to the video content including, for example, video clips, articles, advertisements, chat sessions, games, etc.

With the advent of the Internet, mobile computing, and high-speed wireless networks, users are accessing media on personal computers (PCs) and other devices on which they traditionally did not, such as hand-held computers, personal digital assistants (PDAs), mobile telephones, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as on-line applications (i.e., provided on a web-site), or as stand-alone applications or clients on hand-held computers, PDAs, mobile telephones, or other mobile devices. The various devices and platforms that may implement media guidance applications are described in more detail below.

A modular media guidance dashboard application, also referred to herein as a dashboard application, may provide a unified interface through which guidance for multiple types of media content may be provided across multiple platforms. The dashboard application is also adapted to present personalized media content in a modular fashion such that functionality and features of any number of different types of guidance applications and displays may be incorporated within a single interface. The dashboard application would thus enhance the overall media guidance experience of its users.

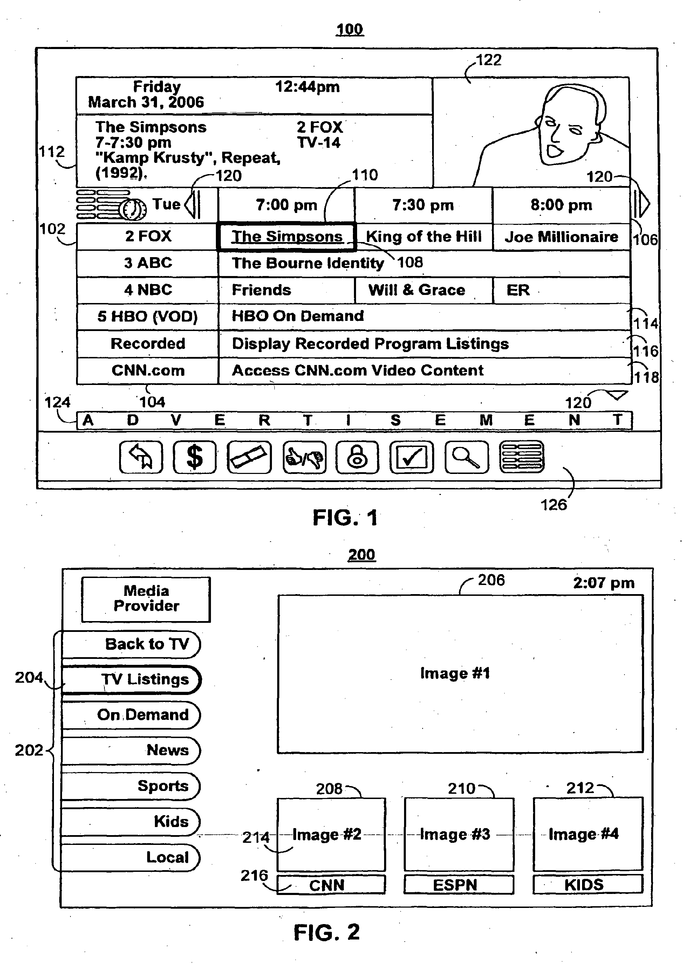

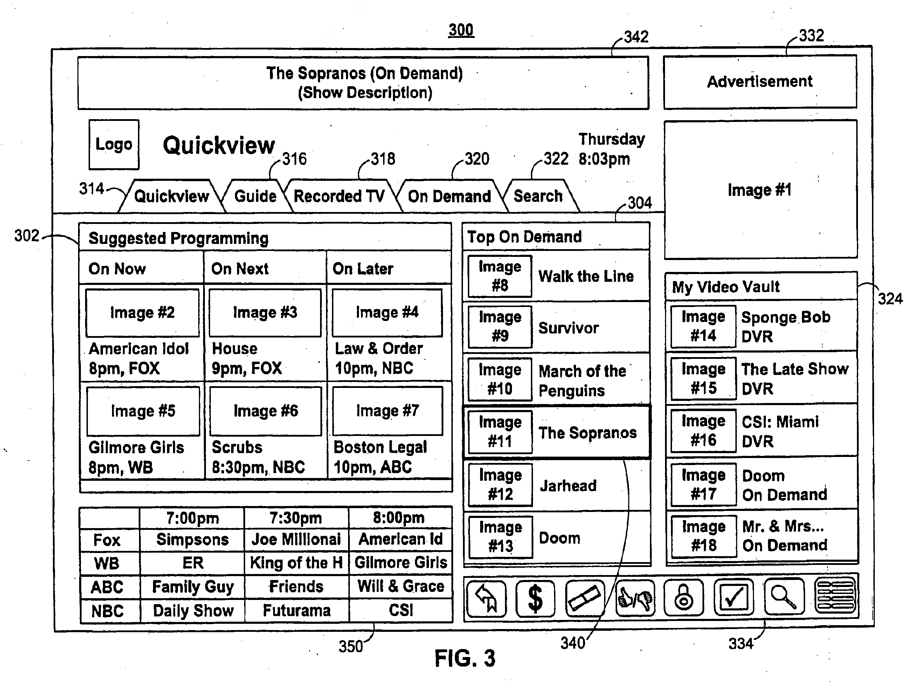

One of the functions of the media guidance application is to provide media listings and media information to user. FIGS. 1 and 2 show illustrative display screens that may be used to provide media guidance, and in particular media listings, in a typical media guidance application. FIGS. 3-5 show illustrative display screens of modular media guidance dashboard applications. The display screens shown in FIGS. 1-2 and 3-5 may be implemented on any suitable device or platform. While the displays of FIGS. 1-2 and 3-5 are illustrated as full screen displays, they may also be fully or partially overlaid over media content being displayed. A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria. User configuration of and navigation through modular media guidance dashboard application display screens will be described in greater detail below.

FIG. 1 shows an illustrative display 100 of grid program listings arranged by time and channel that also enables access to different types of media content in a single display. Display 100 may include grid 102 with: (1) a column of channel/media type identifiers 104, where each channel/media type identifier (which is a cell in the column) identifies a different channel or media type available; and (2) a row of time identifiers 106, where each time identifier (which is a cell in the row) identifies a time block of programming. Grid 102 also includes cells of program listings, such as program listing 108, where each listing provides the title of the program provided on the listing's associated channel and time. With a user input device, a user can select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In addition to providing access to linear programming provided according to a schedule, the media guidance application also provides access to non-linear programming which is not provided according to a schedule. Non-linear programming may contain content from different media sources including on-demand media content (e.g., VOD), Internet content (e.g., streaming media, downloadable media, etc.), locally stored media content (e.g., video content stored on a digital video recorder (DVR), digital video disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND, THE SOPRANOS, and CURB YOUR ENTHUSIASM are trademarks owned by the Home Box Office, Inc. Internet content may include web events such as a chat session or a Webcast, or content available on-demand such as streaming media or downloadable media through Internet web sites or other means of Internet access (e.g., FTP).

Grid 102 may provide listings for non-linear programming including on-demand listing 114, recorded media listing 116, and Internet content listing 118. A display combining listings for content from different types of media sources is sometimes referred to as a "mixed-media" display. The various permutations of the types of listings that may be displayed that are different than display 100 may be based on user selection or guidance application definition (e.g., a display of only recorded and broadcast listings, only on-demand and broadcast listings, etc.). As illustrated, listings 114, 116, and 118 are shown as spanning the entire time block displayed in grid 102 to indicate that selection of these listings may provide access to a display dedicated to on-demand listings, recorded listings, or Internet listings, respectively. In other embodiments, listings for these media types may be included directly in grid 102. Additional listings may be displayed in response to the user selecting one of the navigational icons 120. (Pressing an arrow key on a user input device may affect the display in a similar manner as selecting navigational icons 120.)

Another display arrangement for providing media guidance is shown in FIG. 2. Video mosaic display 200 includes selectable options 202 for media content information organized based on media type, genre, and/or other organization criteria. In display 200, television listings option 204 is selected, thus providing listings 206, 208, 210, and 212 as broadcast program listings. Unlike the listings from FIG. 1, the listings in display 200 are not limited to simple text (e.g., the program title) and icons to describe media. Rather, in display 200 the listings may provide graphical images including cover art, still images from the media content, video clip previews, live video from the media content, or other types of media that indicates to a user the media content being described by the listing. Each of the graphical listings may also be accompanied by text to provide further information about the media content associated with the listing. For example, listing 208 may include more than one portion, including media portion 214 and text portion 216. Media portion 214 and/or text portion 216 may be selectable to view video in full-screen or to view program listings related to the video displayed in media portion 214 (e.g., to view listings for the channel that the video is displayed on).

FIG. 3 illustrates a modular media guidance dashboard application display 300 according to one aspect of the present invention. The dashboard application may operate as a stand-alone application or as part of an interactive media guidance application that also includes display arrangements such as displays 100 and 200 of FIGS. 1 and 2. According to one aspect of the present invention, customized media guidance such as personalized listings for television or other media are provided within modular media guidance dashboard application display 300 in a modular fashion. Each module may provide access to different types of media content in different arrangements. However, the multiple modules of display 300 provide the user with ready access to these different types of media in a single unified display screen. Module display types include, for example, Grid Guide, Program Information, Suggested Programming, Hot List, Watch List, Purchased VOD, Recorded Programs, Programs Scheduled to Record, Most Popular/Highest Rated lists, Search, Program/Movie Browser, Editorial Review, Video Previews, TV Planner, or any other suitable guidance application features. In certain implementations of the media guidance dashboard application, only a limited number of modules are simultaneously provided within a display screen of a dashboard due to space constraints. For example, on dashboard application display 300 of FIG. 3, only "Suggested Programming" module 302, "Top On Demand" module 304, "Grid guide" module 350, and "My Video Vault" module 324 are presented to the users. The selection of the number and type of display modules presented with a common user interface such as dashboard application display 300 will be described below in the context of modular media content organization.

According to the illustrative dashboard application of display 300, "Top On Demand" module 304 includes graphical listings for non-linear, on-demand programming. Similarly, "Suggested Programming" module 302, which suggests current and future programming options that may be of interest to a user, also includes listings for linear programming. "Grid guide" module 350, on the other hand, is capable of providing listings for linear programming, non-linear programming, and any combination thereof. Thus, it can be seen that through the use of multiple guidance modules, listings for multiple media types may be provided in a convenient format. More detailed descriptions of these particular modules will be provided below.

In addition to providing personalized guidance for media content from a myriad of media sources and in a myriad of combinations, dashboard application display 300 is also able to present media listings in a variety of display arrangements. Modules such as "Suggested Programming" module 302, "Top On Demand" module 304 and "My Video Vault" module 324 present listings for media content in a video mosaic display such as display screen 200 of FIG. 2, where both visual and textual information of the media content is captured. "Suggested Programming" module 302, on the other hand, is organized as a video mosaic display a multi-column fashion. "Top On Demand" module 304 is also provides a video mosaic display, but in a single-column display fashion. Therefore, dashboard application display 300 is able to offer a great deal of flexibility in terms of listing arrangements within each module so as to accommodate the varied viewing preferences of its users. The arrangements may be modified, in part, based on the amount of space available within the dashboard display. In addition, modules such as "Grid Guide" 350 present listings for media content in a grid display similar to display screen 100 of FIG. 1, where only textual information regarding the media content is provided.

The modules may be further organized into various tabs in dashboard application display 300 in order to provide logical groupings of the modules according to their display type. Tab display types may include, for example, Quickview 314, Guide 316, Recorded TV 318, On Demand 320, Search 322, etc., as illustrated in FIG. 3. Guide tab 316 may be configured to display modules having grid guides for personalized media content listings. Recorded TV tab 318 may be configured to display modules having listings for media content recorded by a user household. On-Demand tab 320 may be configured to display modules having listings for most popular or highest rated On-Demand programs currently available through the media Guide application. Quickview tab 314 may be configured to display abridged versions of the abovementioned modules whose complete listings are viewable from one or more of the other tabs. For example, Quickview tab 314 of FIG. 3 includes a portion of "Suggested Programming" module 302 that may normally appear in Guide tab 316. Quickview tab 314 further includes a portion of "Top On Demand" module 304 and a portion of "My Video Vault" module 324, whose complete listings may be selectable from On Demand tab 320 and Recorded TV tab 318, respectively. In some embodiments, a tab may be configured to invoke a traditional program display such as displays 100 and 200 of FIGS. 1 and 2, respectively.

In one embodiment, the type and arrangement of one or more tabs are customizable within the dashboard application. For example, a user may choose desired tab types from a pull-down menu (not shown) of dashboard display 300 or by using any other suitable control. In some embodiments, the dashboard may suggest appropriate tab types to the user based on learned user viewing behavior. In some instances, default tabs may be supplied by the dashboard application which the user may later modify in order to obtain his or her desired dashboard layout. In addition to tab categories related to media type and/or category, any other suitable tab categories may also be provided such as, for example, "Primary," "Secondary," "Complex," "Simple," "Mom," "Dad," etc. The user may then place the selected tabs in any desired locations on the dashboard. In some embodiments, placement of the tabs is confined to certain regions of the dashboard display, but the order of the tabs in those regions may be customizable.

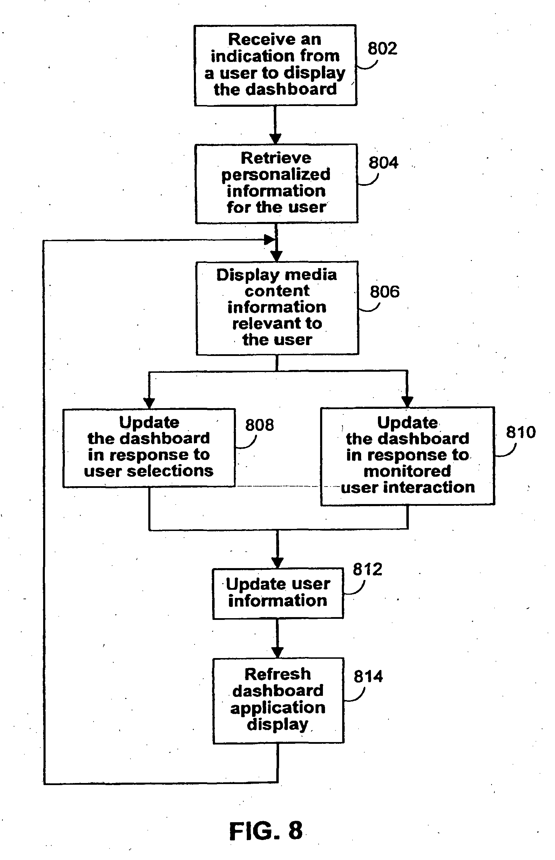

The type and arrangement of the modules provided within one or more tabs of the dashboard application may also be customizable. In some embodiments, customization of the modules may be done "in place," i.e., directly from the dashboard application display so that the user is not required to visit a separate settings area. For example, a user may select desired module types and edit selected module arrangements and settings from a pull-down menu or from windows overlaid on top of dashboard application display 300. Illustrative steps involved in customizing the modules within a dashboard application display will be described in greater detail below with reference to the flowcharts in FIGS. 8-13.

While it is contemplated that the user will be provided with a great deal of flexibility in selecting the types of modules that are displayed within the dashboard application displays, in some embodiments it may be useful to place certain limits or guidelines on the number and types of modules that may be displayed within a display or a particular tab of the display. For example, in an On-Demand tab, it may be useful to limit the selection to only those modules that are related to on-demand programming. Similarly, for a children's themed tab it may be useful to help prevent the selection of modules containing listings for mature content. However, it can be seen that any such limitations are not meant to limit the user's options, but rather to assist the user in creating an easily navigable media guidance display. In some embodiments, the dashboard may suggest a list of appropriate modules to the user based on learned user viewing behavior. In some embodiments, default modules may be supplied by the dashboard which the user may later modify in order to obtain his or her desired layout.

After the selection of modules for a particular tab in a dashboard application display, media content listings within respective modules may be automatically configured by the dashboard application or manually customized by the user. Listings may also be manually added to or deleted from the modules by the user. Module content customization will be described below in further detail. As described above, FIG. 3 provides a few exemplary user-selected modules in Quickview tab 314 of dashboard display 300 that include: "Suggested Programming" module 302, "My Video Vault" module 324, "Top On Demand" module 304, and "Guide" module 350.

In one embodiment, module content customizations may include varying presentation schemes (e.g., color scheme of displays, font size of text, etc.), aspects of displayed media content listings (e.g., only HDTV programming, user-specified broadcast channels based on favorite channel selections, reordering the display of channels, recommended media content, etc.), desired recording features (e.g., recording or series recordings for particular users, recording quality, etc.), parental control settings, etc. In certain embodiments, the area occupied by each program listing within a module is customizable. For example, listings may be of different sizes, but if desired, all the listings may be configured to have the same size. Listings may also be graphically accentuated to indicate degrees of interest to the user or to emphasize certain content, as desired by the media provider or based on user preferences. Various systems and methods for graphically accentuating media listings are discussed in, for example, Yates, U.S. Patent Application No. 11/324,202, filed December 29, 2005, which is hereby incorporated by reference herein in its entirety.

Modular media guidance dashboard application display 300 may be personalized by allowing a user to manually input the desired customization settings and/or by automatic customization based on monitoring user activities to determine user preferences. If dashboard display 300 operates in conjunction with a media guidance application, such as display 100 of FIG. 1, then the user may likewise customize the media guide application where the resulting changes may be communicated to dashboard display 300. Moreover, customizations to the media guide application may be made via the dashboard application and vise versa. In one embodiment, the media content listings may be personalized based on one or more learned user household viewing habits from, for example, a user profile. User profile information may be provided by a user, automatically compiled, or obtained from related applications. In some embodiments, the dashboard application may update user profiles with viewing preference information obtained as a result of monitoring user interactions with the modular media guidance dashboard application. User preference information may also be obtained through monitored user interactions with the media guidance application. These interactions include, for example, scheduling a television program in a planner, setting a recording for a program, and/or watching a televised or recorded program. In some embodiments, profile information is supplied by the user after the user logs into or otherwise identifies himself to the dashboard application. In some embodiments, the dashboard obtains all or parts of other user profiles that are related to a particular user, such as from websites on the Internet, from a centralized database, from a local database from a media guidance application from other interactive applications, or from a handheld device of the user. Additional approaches to obtain user profile information within a media guidance application are described in greater detail in Ellis et al., U.S. Patent Application No. 11/179,410, filed July 11, 2005, Boyer et al., U.S. Patent Application No. 09/437,304, filed November 9, 1999, and Ellis et al., U.S. Patent Application No. 10/105,128, filed February 21, 2002, which are hereby incorporated by reference herein in their entireties.

Learned user viewing behavior may subsequently be analyzed by the media guidance dashboard application for the purpose of suggesting personalized media content to a user household. For example, "Suggested Programing" module 302 may be customized to provide personalized program listings that capture a particular viewing behavior in the user household. As illustrated in module 302, family-friendly shows such as American Idol or Gilmore Girls are suggested for the time block between 8:00pm-9:00pm, followed by medical dramas such as House and Scrubs. This is followed by suggestions for legal-based dramas such as Law & Order and Boston Legal at around 11:00pm. The suggested content and the particular ordering of the suggested content are designed to mirror at least one learned household viewing behavior such as a viewing sequence of family-friendly programs from 8:00pm to 9:00pm, medical dramas from 9:00pm to 10:00pm, and legal-based dramas from 10:00pm to 11:00pm. The suggested programs are not necessarily the same as the programs that have been seen by the user household in the past. They may be programs that are in the same genre or having similar plots as those programs preferred by the user household. In general, a media guidance dashboard application is able to intelligently capture and reflect learned viewer behavior in its programming suggestions by presenting to the user listings of media content items ordered by preferred viewing times and days of the week. In some embodiments, recommendations are based on popularity where the most popular shows across a segment of the viewing population are recommended to the user household. In some embodiments, the most popular shows are determined based on the viewing preferences of the users who have similar viewing interests as the user household. For example, if it has been observed that those who watch "King and Queens" at 8:00pm also tend to watch "The Closer" at 10:00pm, then "The Closer" is likely to be recommended to the user household based on the observation that the user household enjoys watching "King and Queens" at 8:00pm.

The dashboard application may also include customizable modules having listings for non-linear programs that are compiled in accordance with viewing habits learned from the user household. In dashboard display 300 of FIG. 3, "Top On Demand" module 304 provides a listing of on-demand programs that may be statistically popular within or highly rated by a certain segment of the viewing population. The viewing population may be chosen based on one or more characteristics such as age groups, occupations, demographics, geographical regions, etc. The viewing population may also consist of the entire population of subscribers to the dashboard application and/or to any media guidance applications to which the dashboard application is connected. In addition, "My Video Vault" module 324 in dashboard application display 300 includes listings for one or more VOD or DVR programs recently purchased or recorded by the user household in order to facilitate access to these programs from the dashboard.

In certain embodiments, a customizable "Hot List" module may be provided that includes programs matching the attributes of a user profile for capturing at least one user viewing preference. "Top On Demand" module 304 is an illustrative embodiment of a specific type of "Hot List" module. In addition, any programs for which active (non-expired) reminders have been set may be added to a hot list. The hot list may be organized in start-time order or any other suitable order. Priority may be given to pay-per-view listings. In addition, programs may be added to the hot list by the dashboard application and/or by the user when a program starts, or at a specified length of time (e.g., five minutes) prior to the scheduled start time of the program. The dashboard application may provide the user with an opportunity to select the option of displaying the hot list a short time (e.g., one minute) before the scheduled broadcast time of programs on the list. In some embodiments, a "Hot-List" module may be accessed from various electronic devices such as personal computers, hand-held computers, personal digital assistants, mobile telephones and such. Moreover, the module would be appropriately formatted on each of the devices and platforms so as to facilitate a user's interactive media guidance experience. For example, the "Hot List" module displayed in a mobile phone screen would be appropriately configured to adapt to the phone's screen size, color, resolution, sound, bandwidth, etc. Hot lists and their functionalities are described in greater detail in Ellis et al. U.S. Patent Application No. 09/034,934, filed on March 3, 1998, which are hereby incorporated by reference herein in their entireties.

In another embodiment, media content listings within each module may be updated by the dashboard application on a regular basis in order to accurately capture changes in the monitored household viewing behavior. For example, if it is observed that the user household has been watching forensic mysteries instead of medical dramas during the 9:00pm-10:00pm time block, then dramas such as CSI: Las Vegas may be suggested to the user in "Suggested Programming" module 302 in place of medical dramas such as House or Scrubs. In some embodiments, a user is able to select listings for his or her desired programs from a pull-down menu of dashboard display 300 to manually customize and edit various module content. For instance, a user is able to delete certain listings, modules or tabs from the dashboard as well as place additional listings, modules or tabs on dashboard display 300. In some embodiments, these dashboard application customizations may be made directly within the dashboard application display without requiring the user to access additional display screens.

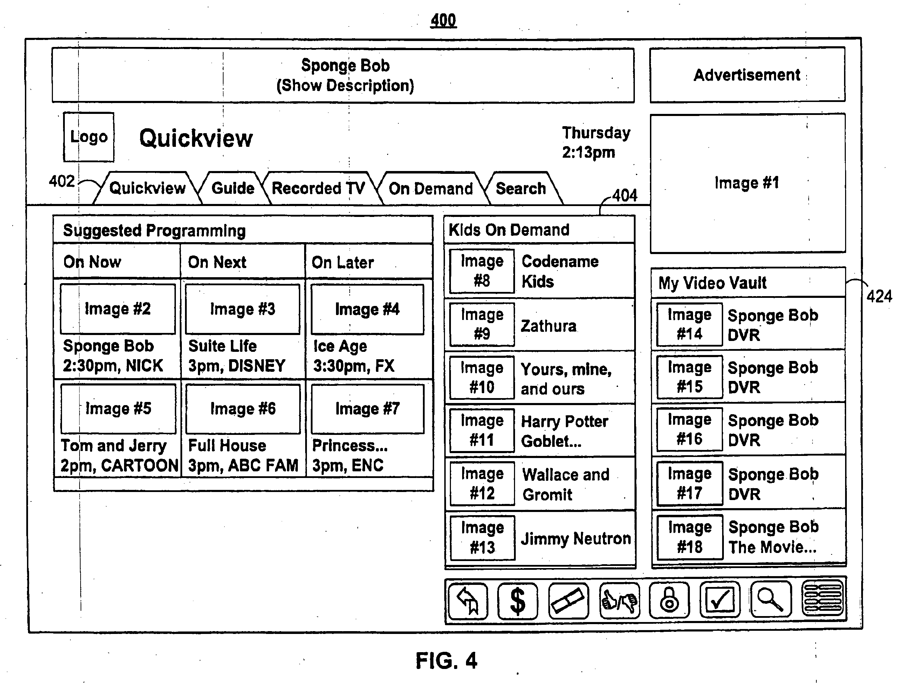

In another embodiment of media content customization, a dashboard display or a tab within a dashboard display may be configured according to a particular theme that is selectable from a number of pre-existing themes. Exemplary themes include Children, Family, Sports, News, Soaps, Talk, Comedy, etc. Consequently, listings displayed in each theme-centric dashboard are likely to refer to media content that is governed by the same theme as the dashboard. FIG. 4 depicts an illustrative dashboard display 400 with a children-based theme. Hence Quickview tab 402 of dashboard display 400 may only contain suggested listings for children programming. A user may configure multiple dashboards having different themes so as to appeal to different members of the user's household.

According to another aspect of the present invention, a media guidance dashboard application, including its various listings, modules, and tabs, may be customized to create a personalized "experience" for its users. In one embodiment, a particular display theme may be applied to the dashboard that affects its aesthetic appeal without affecting its content. A user may select a dashboard theme from a pull-down menu of the dashboard. For example, a "skin" effect may be implemented so that a particular color and/or pattern scheme may be chosen for dashboard display 300.

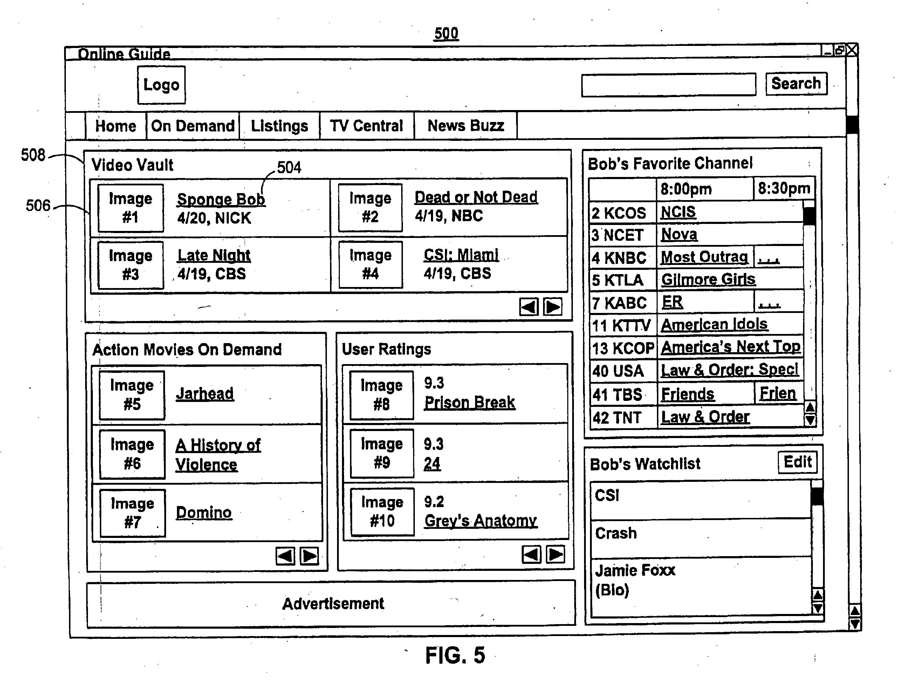

According to another aspect of the invention, a media guidance dashboard application provides a unified interface through which a user is able to access his or her listings for preferred content items from multiple different device platforms. FIG. 5 provides an exemplary dashboard application display 500 that is configured for on-line viewing via devices such as a personal computer or a handheld device. Even though similar media content may be accessed via dashboard application displays 300 and 500, display format for dashboard application 502 is tailored so that it is compatible with its underlying architecture for facilitating on-screen user navigation. That is, different layout of modules and tabs within a dashboard may be provided across different platforms even though the content and type of these modules and tabs may be the same across the different platforms. In one embodiment, hyperlinks may be embedded in dashboard display 500 to provide a user with additional information about the program listings. These hyperlinks may connect program listings of dashboard 500 to websites internal or external to media guidance application 500 and may contain information relevant to the respective program listings. For example, hyperlink, 504, when activated, brings forth an official SPONGE BOB website if the user desires to learn more about SPONGE BOB program listing 506 as shown in "Video Vault" module 508.

In another embodiment, the dashboard application may make personalized content suggestions based on the type of media content that is accessible on the devices and/or user interaction with the individual devices. In some embodiments, a user may manually select the manner in which his or her desired content is to appear on different devices. For example, modules such as "Favorite Channels" and "User Ratings" are provided on online dashboard application display 500, but not on television-based dashboard application display 300. This may be due to explicit user preferences or automatic dashboard application determination of user preferences based on the user's interactive with, for example, the Internet. In another example, web-based "Top On Demand" and "Video Vault" modules of FIG. 5 are similarly configured as their television-based counterpart modules 304 and 324, respectively. This may be because both on-demand programming and recorded video content are available on televisions as well as on the Internet and/or the user has manually selected these two modules to be universally displayed across multiple user devices.

The media guidance dashboard application may be retrieved from devices such as personal computers, hand-held computers, personal digital assistants, mobile telephones and such. In general, the various components of the dashboard application may be configured, modified and accessed from any suitable device or platform. Moreover, the dashboard application would be appropriately formatted on each of the devices and platforms so as to facilitate a user's interactive media guidance experience. For example, if a television equipment platform is internet-enabled, then the dashboard application may provide access to Internet content in a format that is suitable for television navigation and television display. In another example, if a user computer includes a tuner allowing for accessing to television programming, then the dashboard application may likewise provide access to television content on a format that is compatible with on-line navigation and computer display.

The media guidance application may also have the same layout on the various different types of user equipment or may be tailored to the display capabilities of the user equipment. For example, on user computer equipment, the guidance application may be provided as a web site accessed by a web browser. In another example, the guidance application may be scaled down for wireless user communications devices. In general, the media guidance dashboard application of the present invention may be adaptably formatted to seamlessly integrate with both the hardware and software aspects of a device while offering a number of different types of media content.

According to another aspect of the invention, a media guidance dashboard application may also include video, advertisement, and/or option regions such as video region 130, advertisement region 132, and/or option region 134 of dashboard display 300 in FIG. 3. In other embodiments, individual modules or tabs of dashboard display 300 may include their own video, advertisement and/or option regions. For example, grid guide display 100 of FIG. 1 includes video region 122, advertisement region 124 and options region 126. Video region 130 may allow the user to view and preview programs that are currently available, will be available, or were available to the user. The content of video region 330 may correspond to, or be independent from, one of the listings displayed in the modules. A video region may also appear with in grid guide display module 350 which is sometimes referred to as a picture-in-guide (PIG) display. PIG displays and their functionalities are described in greater detail in Satterfield et al. U.S. Patent No. 6,564,378, issued May 13, 2003 and Yuen et al. U.S. Patent No. 6,239,794, issued May 29, 2001, which are hereby incorporated by reference herein in their entireties.

Advertisement section 332 may provide an advertisement for media content that, depending on a user's access rights (e.g., for subscription programming is currently available for viewing, will be available for viewing in the future, or may never become available for viewing, and may correspond to or be unrelated to one or more of the media listings in the various modules. Advertisement section 332 may also be for products or services related or unrelated to the media content displayed in dashboard display 300. Advertisement section 332 may be selectable and provide further information about media content, provide information about a product or a service, enable purchasing of media content, a product, or a service, provide media content relating to the advertisement, etc. Advertisement section 332 may be used to target a user based on the user's profile/preferences, monitored user activities, the type of display provided, or other suitable targeted advertisement bases.

While advertisement 332 is shown as rectangular or banner shaped, advertisements may be provided in any suitable size, shape, and location in media guidance dashboard application screen 300. For example, advertisement 332 may be provided as a rectangular shape below grid guide module 350. This is sometimes referred to as a panel advertisement. In addition, advertisements may be overlaying media content displays or embedded within a display. Advertisements may also include text, images, rotating images, video clips, or other types of media content. Advertisements may be stored in the user equipment with the dashboard guidance application, in a database connected to the user equipment, in a remote location (including streaming media servers), or on other storage means or a combination of these locations. Providing advertisements in a media guidance application is discussed in greater detail in, for example, Knudson et al., U.S. Patent Application No. 10/347,673, filed January 17, 2003, Ward, III et al. U.S. Patent No. 6,756,997, issued June 29, 2004 and Schein et al. U.S. Patent No. 6,388,714, issued May 14, 2002, which are hereby incorporated by reference herein in their entireties.

Options region 334 may allow the user to access different types of media content, media guidance application displays, and/or media guidance application features. Options region 334 may be part of dashboard display 300 (and other display screens of the present invention), or may be invoked by a user by selecting an on-screen option or pressing a dedicated or assignable button on a user input device. The selectable options within options region 334 may concern features related to program listings in modules 302, 304, 324 and 350. Features related to program listings may include searching for other air times or ways of receiving a program, recording a program, enabling series recording of a program, setting program and/or channel as a favorite, purchasing a program, or other features. Other available options may include search options, VOD options, parental control options, subscribe to a premium service, edit a user's profile, access a browse overlay, or other options.

When using a media guidance dashboard application, a user may invoke the dashboard display by pressing a dedicated button on a remote control or from other user input devices such as from a mouse or a keyboard. A user also may invoke the dashboard within another application such as from another media guide application or from a dedicated website that authenticates the user prior to dashboard access. For example, the dashboard application may be accessible from another application by selecting a selectable option on the application (e.g., a menu option, an icon, a hyperlink, etc.). This parent application may be a media guidance application such as applications 100 and 200 of FIGS. 1 and 2, respectively. In response to the user's indication, the dashboard application may be shown on a separate display screen or the same screen as the parent application. In turn, the media guidance application may be accessed from within the dashboard application via a selectable option. In certain embodiments, the dashboard is expandable to a full screen size. In other embodiments, the dashboard fully or partially overlays current applications being displayed such as a grid guide or another website. A user may indicate a desire to access media information on a dashboard display, such as display 300, by first selecting an appropriate screen according to its defined display type. Program listings on that screen may then be selected by moving a highlight region 340 using a suitable input device. Information related to the program listing selected by highlight region 340 may be provided in program information region 342. Region 342 may include, for example, the program title, the tile description, the time the program is provided (if applicable), the channel the program is on (if applicable), the program's ratting, and other desired information.

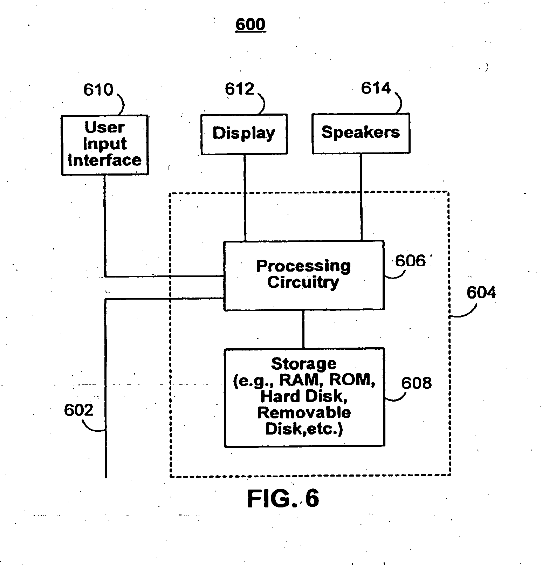

Users may access media content in a media guidance dashboard application from one or more user equipment devices. FIG. 6 shows a generalized embodiment of illustrative user equipment device 600. More specific implementations of user equipment devices are discussed below in connection with FIG. 6. User equipment device 600 may receive media content and data via input/output (hereinafter "I/O") path 602. I/O path 602 may provide media content (e.g., broadcast programming, on-demand programming, Internet content, and other video or audio) and data to control circuitry 604, which includes processing circuitry and storage 608. Control circuitry 604 may be used to send and receive commands, requests, and other suitable data using I/O path 602. I/O path 602 may connect control circuitry 604 (and specifically processing circuitry 606) to one or more communications paths as described below. I/O functions may be provided by one or more of these communications paths, but are shown as a single path in FIG. 6 to avoid overcomplicating the drawing.

Control circuitry 604 may be based on any suitable processing circuitry 606 such as processing circuitry based on one or more microprocessors, microcontrollers, digital signal processors, programmable logic devices, etc. In some embodiments, control circuitry 604 executes instructions for a media guidance dashboard application stored in memory (i.e., storage 608). In client-server based embodiments, control circuitry 604 may include communications circuitry suitable for communicating with a guidance application server or other networks or servers. Communications circuitry may include a cable modem, an integrated services digital network (ISDN) modem, a digital subscriber line (DSL) modem, a telephone modem, or a wireless modem for communications with other equipment. Such communications may involve the Internet or any other suitable communications networks or paths which is described in more detail in connection with FIG. 6. In addition, communications circuitry may include circuitry that enables peer-to-peer communication of user equipment devices, or communication of user equipment devices in locations remote from each other as described in more detail below.

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 608 that is part of control circuitry 604. Storage 608 may include one or more of the above types of storage devices. For example, user equipment device 600 may include a hard drive for a DVR (sometimes called a personal video recorder, or PVR) and a DVD recorder as a secondary storage device. Storage 608 may be used to store various types of media described herein and guidance application data, including program information, guidance application settings, user preferences or profile information, or other data used in operating the guidance application. Nonvolatile memory may also be used (e.g., to launch a boot-up routine and other instructions).

Control circuitry 604 may include video generating circuitry and tuning circuitry, such as one or more analog tuners, one or more MPEG-2 decoders or other digital decoding circuitry, high definition tuners, or any other suitable tuning or video circuits or combinations of such circuits may also be included as part of circuitry 604. Encoding circuitry (e.g., for converting over-the-air, analog, or digital signals to MPEG signals for storage) may also be provided. Control circuitry 604 may also include scaler circuitry for upconverting and downconverting media into the preferred output format of the user equipment 600. Circuitry 604 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 608 is provided as a separate device from user equipment 600, the tuning and encoding circuitry (including multiple tuners) may be associated with storage 608.

A user may control the control circuitry 604 using user input interface 610. User input interface 610 may be any suitable user interface, such as a remote control, mouse, trackball, keypad, keyboard, touch screen, touch pad, stylus input, joystick, voice recognition interface, or other user input interfaces. Display 612 may be provided as a stand-alone device or integrated with other elements of user equipment device 600. Display 612 may be one or more of a monitor, a television, a liquid crystal display (LCD) for a mobile device, or any other suitable equipment for displaying visual images. In some embodiments, display 612 may be HDTV-capable. Speakers 614 may be provided as integrated with other elements of user equipment device 600 or may be stand-alone units. The audio component of videos and other media content displayed on display 612 may be played through speakers 614. In some embodiments, the audio may be distributed to a receiver (not shown), which processes and outputs the audio via speakers 614.

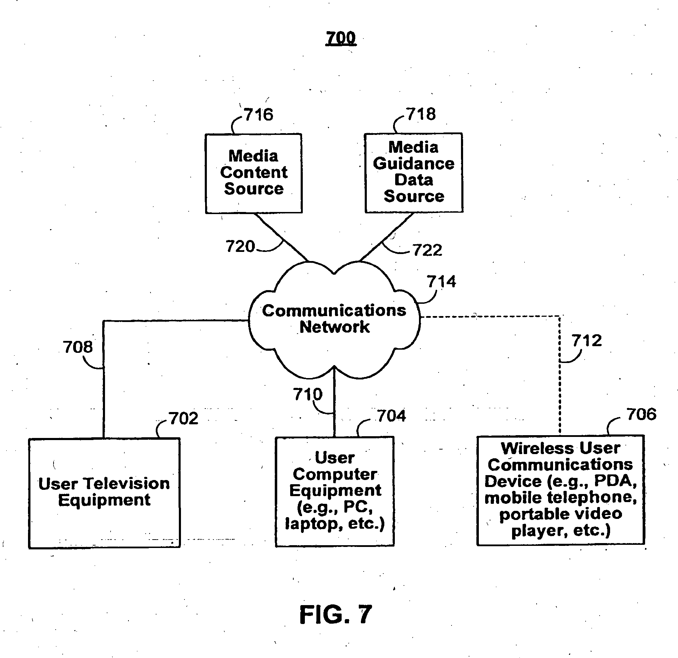

User equipment device 600 of FIG. 6 can be implemented in system 700 of FIG. 7 as user television equipment 702, user computer equipment 704, wireless user communications device 706, or any other type of user equipment suitable for accessing media, such as a non-portable gaming machine. For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 702 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 704 may include a PC, a laptop, a tablet, a WebTV box, a personal computer television (PC/TV), a PC media server, a PC media center, or other user computer equipment. WEBTV is a trademark owned by Microsoft Corp. Wireless user communications device 706 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 702, user computer equipment 704, and wireless user communications device 706 may utilize at least some of the system features described above in connection with FIG. 3 and, as a result, include flexibility with respect to the type of media content available on the device. For example, user television equipment 702 may be Internet-enabled allowing for access to Internet content, while user computer equipment 704 may include a tuner allowing for access to television programming.

In system 700, there is typically more than one of each type of user equipment device but only one of each is shown in FIG. 7 to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user equipment devices may be coupled to communications network 714. Namely, user television equipment 702, user computer equipment 704, and wireless user communications device 706 are coupled to communications network 714 via communications paths 708, 710, and 712, respectively. Communications network 714 may be one or more networks including the Internet, a mobile phone network, mobile device (e.g., Blackberry) network, cable network, public switched telephone network, or other types of communications network or combinations of communications networks. BLACKBERRY is a trademark owned by Research In Motion Limited Corp. Paths 708, 710, and 712 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 712 is drawn with dotted lines to indicate that in the exemplary embodiment shown in FIG. 7 that it is a wireless path and paths 708 and 710 are drawn as solid lines to indicate they are wired paths (although these paths may be wireless paths, if desired). Communications with the user equipment devices may be provided by one or more of these communications paths, but are shown as a single path in FIG. 7 to avoid overcomplicating the drawing.

Although communications paths are not drawn between user equipment devices, these devices may communicate directly with each other via communication paths, such as those described above in connection with paths 708, 710, and 712, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a trademark owned by Bluetooth SIG, INC. The user equipment devices may also communicate with each other directly through an indirect path via communications network 714.

System 700 includes media content source 716 and media guidance data source 718 coupled to communications network 714 via communication paths 720 and 722, respectively. Paths 720 and 722 may include any of the communication paths described above in connection with paths 708, 710, and 712. Communications with the media content source 716 and media guidance data source 718 may be exchanged over one or more communications paths, but are shown as a single path in FIG. 7 to avoid overcomplicating the drawing. In addition, there may be more than one of each of media content source 716 and media guidance data source 718, but only one of each is shown in FIG. 7 to avoid overcomplicating the drawing. (The different types of each of these sources are discussed below.) If desired, media content source 716 and media guidance data source 718 may be integrated as one source device. Although communications between sources 716 and 718 with user equipment devices 702, 704, and 706 are shown as through communications network 714, in some embodiments, sources 716 and 718 may communicate directly with user equipment devices 702, 704, and 706 via communications paths (not shown) such as those described above in connection with paths 708, 710, and 712.

Media content source 716 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC is a trademark owned by the ABC, INC., and HBO is a trademark owned by the Home Box Office, Inc. Media content source 716 may be the originator of media content (e.g., a television broadcaster, a Webcast provider, etc.) or may not be the originator of media content (e.g., an on-demand media content provider, an Internet provider of video content of broadcast programs for downloading, etc.). Media content source 716 may include cable sources, satellite providers, on-demand providers, Internet providers, or other providers of media content. Media content source 716 may also include a remote media server used to store different types of media content (including video content selected by a user), in a location remote from any of the user equipment devices. Systems and methods for remote storage of media content, and providing remotely stored media content to user equipment are discussed in greater detail in connection with Ellis et al., U.S. Patent Application No. 09/332,244, filed June 11, 1999, which is hereby incorporated by reference herein in its entirety.

Media guidance data source 718 may provide media guidance data, such as media listings, media-related information (e.g., broadcast times, broadcast channels, media titles, media descriptions, ratings information (e:g., parental control ratings, critic's ratings, etc.), genre or category information, actor information, logo data for broadcasters' or providers' logos, etc.), media format (e.g., standard definition, high definition, etc.), advertisement information (e.g., text, images, media clips, etc.), on-demand information, and other type of guidance data that is helpful for a user to navigate among and locate desired media selections.

Media guidance application data may be provided to the user equipment devices using any suitable approach. In some embodiments, the guidance application may be a stand-alone interactive television program guide that receives program guide data via a data feed (e.g., a continuous feed, trickle feed, or data in the vertical blanking interval of a channel). Program schedule data and other guidance data may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency (e.g., continuously, daily, a user-specified period of time, a system-specified period of time, in response to a request from user equipment, etc.). In some approaches, guidance data from media guidance data source 718 may be provided to users' equipment using a client-server approach. For example, a guidance application client residing on the user's equipment may initiate sessions with source 718 to obtain guidance data when needed. Media guidance data source 718 may provide user equipment devices 702, 704, and 706 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 704 of user equipment device 700 and partially on a remote server as a server application (e.g., media guidance data source 718). The guidance application displays may be generated by the media guidance data source 718 and transmitted to the user equipment devices. The media guidance data source 718 may also transmit data for storage on the user equipment, which then generates the guidance application displays based on instructions processed by control circuitry.

Media guidance system 700 is intended to illustrate a number of approaches, or network configurations, by which user equipment devices and sources of media content and guidance data may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 7.

In one approach, user equipment devices may communicate with each other within a home network. User equipment devices can communicate with each other directly via short-range point-to-point communication schemes describe above, via indirect paths through a hub or other similar device provided on a home network, or via communications network 714. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Application No. 11/179,410, filed July 11, 2005. Different types of user equipment devices in a home network may also communicate with each other to transmit media content. For example, a user may transmit media content from user computer equipment to a portable video player or portable music player.

In a second approach, users may have multiple types of user equipment by which they access media content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance applications on the user's in-home equipment. Various systems and methods for user equipment devices communicating, where the user equipment devices are in locations remote from each other, is discussed in, for example, Ellis et al., U.S. Patent Application No. 10/927,814, filed August 26, 2004, which is hereby incorporated by reference herein in its entirety.

In a third approach, users of user equipment devices inside and outside a home can use their media guidance application to communicate directly with media content source 716 to access media content. Specifically, within a home, users of user television equipment 704 and user computer equipment 706 may access the media guidance application to navigate among and locate desirable media content. Users may also access the media guidance application outside of the home using wireless user communications devices 706 to navigate among and locate desirable media content.

It will be appreciated that while the discussion of media content has focused on video content, the principles of media guidance can be applied to other types of media content, such as music, images, etc.

FIGS. 8-13 are flowcharts of steps involved in providing various features and embodiments of the present invention. In practice, one or more of the steps shown may be combined with other steps, performed in any suitable order, or deleted.

FIG. 8 shows a flowchart 800 of illustrative steps involved in providing a modular media guidance dashboard application that displays a customizable interactive user interface that may be effective across multiple platforms to create a common interface for media guidance. At step 802 an indication is received (e.g., via user input interface 610 at processing circuitry 606 (FIG. 6)) from a user to display a modular media guidance dashboard application. At step 804, personalized information for the user, such as a centralized user profile may be retrieved, for example, by accessing storage 608 (FIG. 6) or a centralized database at a remote server. In some embodiments, in order to retrieve the personalized information pertinent to the user, the user may provide login information. At step 806, the retrieved media content information relevant to that user may be displayed within a customizable modular media guidance dashboard application, e.g., on display 612 (FIG. 6). The dashboard display may be formatted in order to be compatible with the architecture of a particular device, platform. For example, display screen 300 (FIG. 3) may be formatted for a television display while screen 400 (FIG. 4) may be formatted for internet viewing. Suitable platforms may include any electronic devices such as a television 702 (FIG. 7), a computer 704 (FIG. 7) (e.g., a personal computer, a hand-held computer, etc.), and/or a wireless communication device 706 (FIG. 7) (e.g., a personal digital assistant (PDAs), a mobile telephone, etc.).

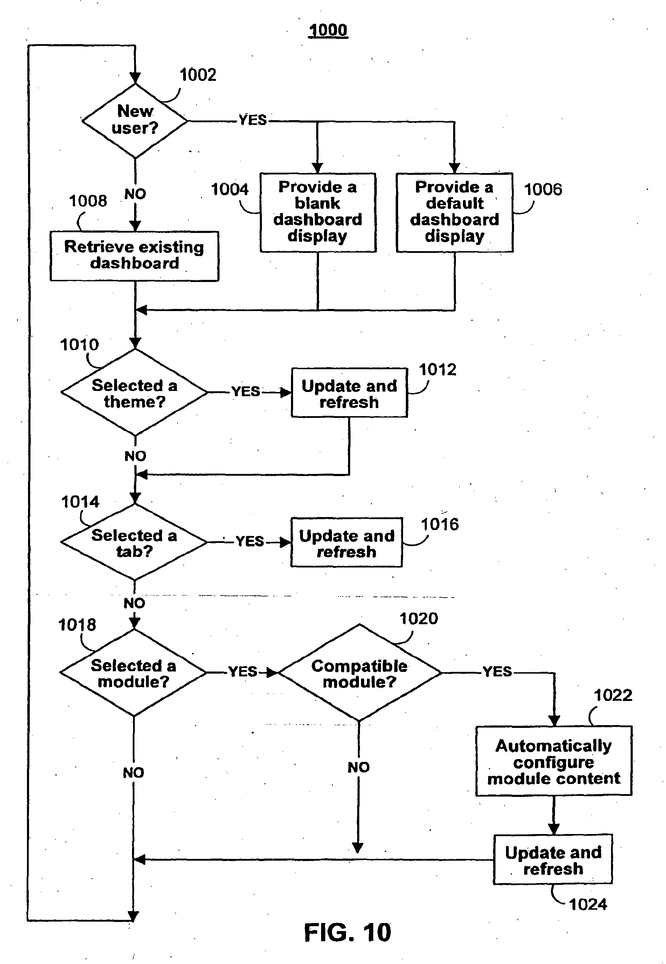

The content presented in the dashboard application display may be updated in several ways. At step 808, the user may configure the dashboard application by selecting or deleting one or more media modules to be displayed within an user interface of the dashboard application. For example, user selection of modules may be communicated to processing circuitry 606 via user input interface 610 (FIG. 6). At step 810, the dashboard application display may be automatically updated by processing based on monitored user interactions. At step 812, the processing circuitry may update the user information, e.g., by updating a centralized profile of the user. At step 814, processing circuitry 606 may also refresh the dashboard application display in response to the updates made at step 812. The dashboard customization process will be described in more detail below in conjunction with flow diagram 1000 in FIG. 10.

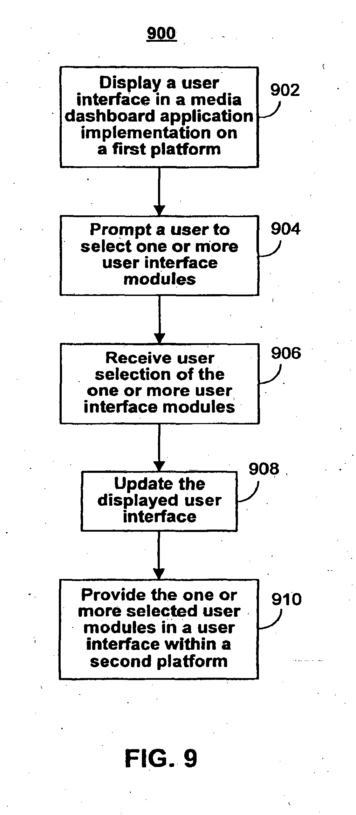

FIG. 9 shows a flowchart of another set of illustrative steps involved in providing a modular media guidance dashboard application that displays a customizable interactive user interface. At step 902, a user interface may be displayed in a dashboard application display implemented on a first user platform. The platform may include any electronic devices such as a television, a personal computer, a hand-held computer, a personal digital assistant (PDAs), a mobile telephone, or other mobile devices. At step 904, a user may be prompted to select one or more user interface modules to be displayed within the user interface of the dashboard application. At step 906, the dashboard application receives the user selection of the one or more user interface modules and automatically updates the displayed user interface to include the one or more selected modules at step 908. A local and/or remote user profile may also be updated based on the user selections. At step 910, the one or more selected user interface modules may be provided within a user interface in a second platform. For example, the dashboard application may provide a user interface that is compatible with the second platform and also displays the or more modules that were selected from the user interface of the first platform.

FIG. 10 shows a flowchart 1000 of illustrative steps involved in configuring a modular media guidance dashboard application. At step 1002, if it is determined that the user is new to the dashboard application, a blank dashboard display may be provided to the user at step 1004 for customization. In another embodiment at step 1006 a default dashboard application is provided to the user which the user may customize. If it is determined that the user has at least one pre-existing dashboard application configuration, the dashboard application including its user interfaces and modules are retrieved at step 1008, where the configuration information may be obtained from, for example, memory 608 (FIG. 6) or a centralized database at a remote server.

Customization of the dashboard application user interface may be made at every modular level of the dashboard application. If it is determined at step 1010 that the user has selected a theme to be applied to the dashboard application, then the dashboard is appropriately updated and refreshed with the selected theme and displayed at step 1012. An exemplary children-based theme is shown in dashboard application display 400 of FIG. 4, where only personalized children-based programs are displayed. Then, at step 1014, if it is determined that the user has selected a particular tab to be displayed in the dashboard application display, the dashboard application display is updated and refereshed to display the selected tab at step 1016. Exemplary user interface tabs include "Quickview" tab 314 in FIG. 3 and "Listings" tab in FIG. 5. At step 1018 it is determined whether the user has selected a module to be incorporated into the user interface. If so, at step 1020, if the module is compatible with the user interface, e.g., with the selected theme and/or selected tab. If there are no compatibility conflicts, the module is placed within the user interface of the dashboard application display and the content of the selected module may be automatically configured by the dashboard application at step 1022 based on monitored user interactions or explicit selections made by the user. At step 1024 the dashboard application display is updated and refreshed as the display the selected module. In addition, appropriate updates are made to the dashboard to track the customization, such as updating a centralized user profile.

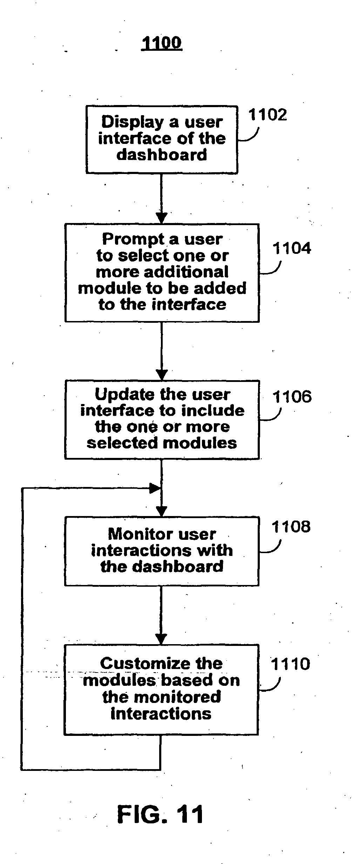

FIG. 11 shows a flowchart 1100 of another set of illustrative steps involved in customizing the modular media guidance dashboard application. At step 1102, processing circuitry 606 displays a personalized user interface to the user of the dashboard application. At step 1104, the user is prompted to select one or more additional modules to be added to the interface. At step 1106, the dashboard application updates the user interface to incorporate the one or more selected modules. Based on monitored user interactions with the dashboard application at step 1108, the dashboard application may automatically customize the media information provided in the modules at step 1110. The steps of monitoring user interactions and customizing the modules based on the monitored user interactions may be repeated continuously, for a predetermined period, or based on user preferences.

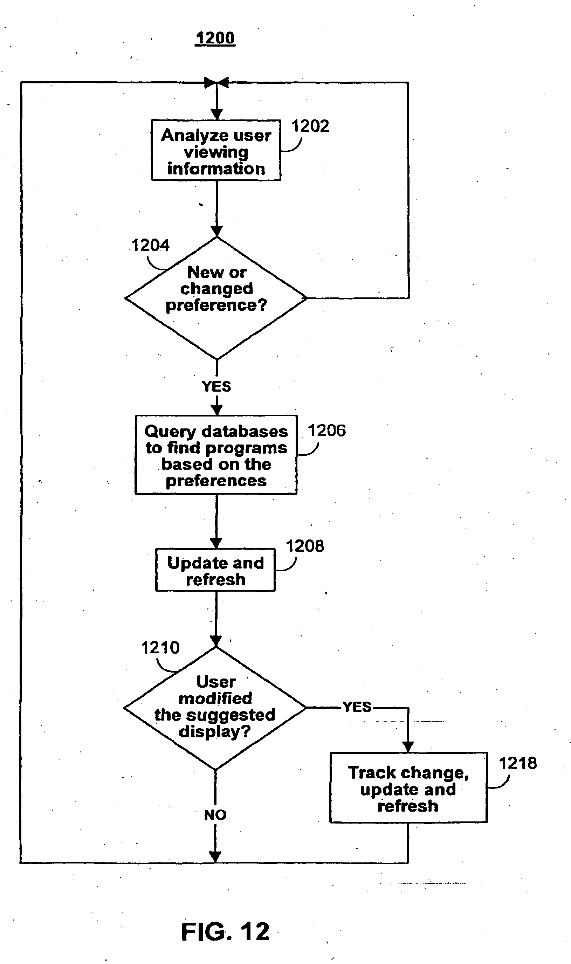

FIG. 12 shows a flowchart 1200 of the illustrative steps involved in automatically configuring the modular media guidance dashboard application. At step 1202, user interactions with the dashboard are analyzed to determine whether there is a new viewing preference or a change in the existing preferences at step 1204. At step 1206, based on the analysis, available media content listings are queried in order to find media content that may be of interest the user. For example, processing circuitry 606 may queries media content in databases from memory 606, media content source 716 (FIG. 7), and/or media guidance data source 718 (FIG. 7). Then, at step 1208, the dashboard application display may be refreshed to include modules for media content listings that are of potential interest to the user. If it is determined that the user has modified the suggested dashboard display at step 1210 (e.g. adding or removing modules), these changes may be tracked, updated, and refreshed at step 1218 in order to fine tune the analysis based on monitored user interactions. This automatic update may be repeated continuously, for a predetermined period, or based on user preferences.

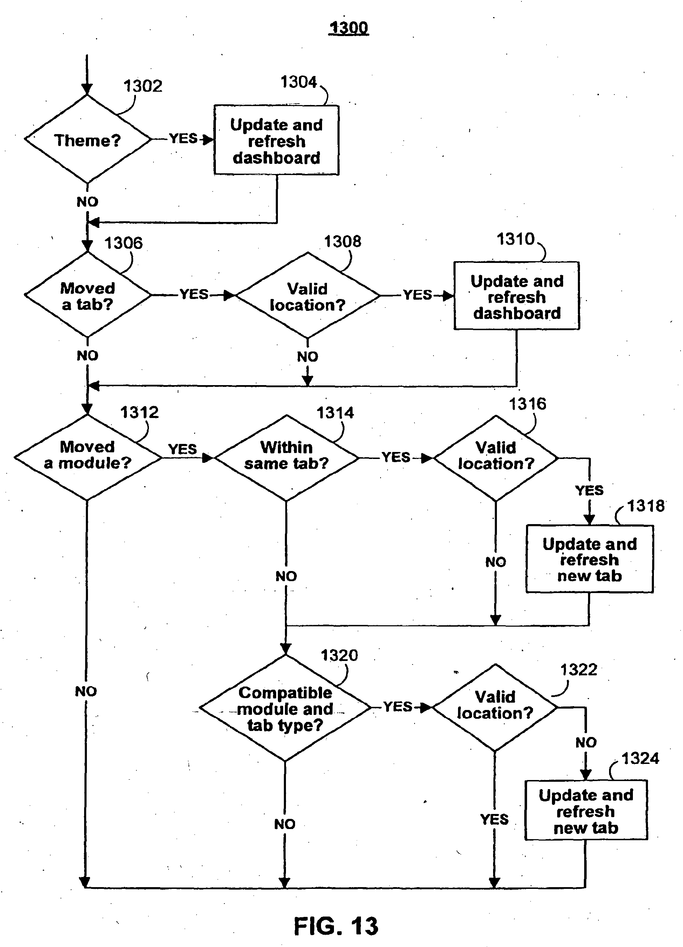

FIG. 13 is a flowchart 1300 of the illustrative steps involved in configuring the layout of a modular media guidance dashboard application. At step 1302, it is determined whether the user has chosen a theme that would alter the look of the dashboard. If so, appropriate updates to the dashboard and the centralized user profile may be made at step 1304. If the user has moved a tab user interface within the dashboard at step 1306, a determination may be made at step 1308 to determined whether the indicated position is valid, i.e., if the desired tab placement is at a permitted area of the dashboard. If so, appropriate updates to the dashboard and user profile may be made at step 1310. Similar determinations may be made for the layout of the modules as well. In particular, if it is determined at steps 1312 and 1314 that the user has moved a module within a tab of the user interface, the dashboard may be updated and refreshed to reflect this change at step 1318 after it has been determined at step 1316 that the new location is valid. However, if the module is to be moved to a different tab, a determination may be made at step 1320 to determine whether the module type is compatible with the tab. If there is no conflict, the dashboard may be updated and refreshed to reflect this change at step 1324 after it has been determined at step 1322 that the new location is valid.

Thus it is seen that systems and methods for a customizable, modular media guidance dashboard application is provided that supports modular media information display and multi-platform access. One skilled in the art will appreciate that the invention can be practiced by other than the described embodiments, which are presented for purposes of illustration and not of limitation, and the present invention is limited only by the claims which follow.

## Claims

1. A method for personalizing a user interface (300, 400, 500) in a multi-platform interactive media guidance application, the method comprising: displaying the user interface in an interactive media guidance application implemented on a first platform (702, 704, 706); **characterized by**
prompting a user to select one or more user interface modules to be displayed within the user interface (300, 400, 500) on the first platform (702, 704, 706);
receiving a user selection of the one or more user interface modules;
updating the displayed user interface (300, 400, 500) to include the one or more selected user interface modules; and
communicating the user selection of the one or more user interface modules over a network (714) so that the one or more selected user interface modules can be displayed within a user interface (300, 400, 500) on a second platform.

2. The method of claim 1, further comprising:
monitoring user interactions with the interactive media guidance application; and
customizing at least one of the one or more selected user interface modules in response to the monitored user interactions.

3. The method of claim 2, wherein one or more user interface modules are suggested to the user by the media guidance application based on the monitored user interactions.

4. The method of claim 2, further comprising updating a centralized user profile in response to the customization, wherein the centralized user profile includes at least one user interface module and customization settings associated with the at least one user interface module.

5. The method of claim 1, further comprising:
determining a location of the user; and
customizing at least one of the one or more selected user interface modules in response to the determined location.

6. The method of claim 1, further comprising prompting the user to configure the one or more selected user interface modules in the first platform (702, 704, 706) and automatically applying the configuration of the one or more selected user interface modules within the user interface (300, 400, 500)in the second platform (702, 704, 706).

7. The method of claim 1, further comprising:
displaying one or more user interface modules in the user interface (300, 400, 500), wherein the one or more modules include media information;
prompting the user to select an additional user interface module to be added to the user interface (300, 400, 500) ;
updating the displayed user interface (300, 400, 500) to include the additional user interface modules;
monitoring user interactions with the interactive media guidance application; and
customizing at least one of the user interface modules in response to the monitored user interactions.

8. A personalized multi-platform interactive media guidance application, comprising:
a user interface (300, 400, 500) displayed in an interactive media guidance application on a first platform (702, 704, 706); **characterized by**
one or more user-selectable interface modules displayable within the user interface (300, 400, 500) on the first platform (702, 704, 706) and on a second platform (702, 704, 706), wherein:
when the user interface on the first platform (702, 704, 706) is updated to include a user selection made on the first platform of the one or more user interface modules
the user selection of the one or more user interface modules is communicated over a network (714) so that the one or more selected user interface modules can be displayed when the user interface (300, 400, 500) is accessed on a second platform (702, 704, 706) .

9. The application of claim 8, further comprising:
a monitor for monitoring user interactions with the interactive media guidance application; wherein
at least one of the one or more selected user interface modules is customized by the media guidance application in response to the monitored user interactions.

10. The application of claim 9, wherein the one or more user interface modules are suggested to the user by the media guidance application based on the monitored user interactions.

11. The application of claim 9, further comprising a centralized user profile updated in response to the customization, wherein the centralized user profile includes at least one user interface module and customization settings associated with the at least one user interface module.

12. The application of claim 8, wherein a location of the user is determined by the media guidance application, and
at least one of the one or more selected user interface modules is customized in response to the determined location.

13. The application of claim 8, wherein the one or more selected user interface modules are configurable in the first platform (702, 704, 706)and the application comprises means for automatically applying the configuration of the one or more selected user interface modules within the user interface (300, 400, 500)in the second platform.

14. The application of claim 8, further comprising:
one or more user interface modules displayable in the user interface (300, 400, 500), wherein the one or more modules include media information;
an additional user-selectable interface adapted to be added to the user interface;
a display (612) for updating the displayed user interface (300, 400, 500) to include a user selection for the additional user interface modules; and
a monitor for monitoring user interactions with the interactive media guidance application; wherein
at least one of the user interface modules is customized in response to the monitored user interactions.

## Patentansprüche

1. Verfahren für das Personalisieren einer Benutzerschnittstelle (300, 400, 500) in einer interaktiven Medienführungsanwendung für mehrere Plattformen, wobei das Verfahren Folgendes umfasst:
Anzeigen der Benutzerschnittstelle in einer interaktiven Medienführungsanwendung, die auf einer ersten Plattform (702, 704, 706) implementiert ist; **gekennzeichnet durch**
Auffordern eines Benutzers, ein oder mehrere Benutzerschnittstellenmodule auszuwählen, die in der Benutzerschnittstelle (300, 400, 500) auf der ersten Plattform (702, 704, 706) angezeigt werden sollen;
Empfangen einer Benutzerauswahl des einen oder der mehreren Benutzerschnittstellenmodule;
Aktualisieren der angezeigten Benutzerschnittstelle (300, 400, 500), sodass sie das eine oder die mehreren ausgewählten Benutzerschnittstellenmodule enthält; und
Kommunizieren der Benutzerauswahl des einen oder der mehreren Benutzerschnittstellenmodule über ein Netzwerk (714), sodass das eine oder die mehreren ausgewählten Benutzerschnittstellenmodule in einer Benutzerschnittstelle (300, 400, 500) auf einer zweiten Plattform angezeigt werden können.

2. Verfahren nach Anspruch 1, des Weiteren umfassend:
Beobachten von Benutzerinteraktionen mit der interaktiven Medienführungsanwendung; und
Anpassen von mindestens einem des einen oder der mehreren ausgewählten Benutzerschnittstellenmodule als Reaktion auf die beobachteten Benutzerinteraktionen.

3. Verfahren nach Anspruch 2, wobei dem Benutzer durch die Medienführungsanwendung auf der Grundlage der beobachteten Benutzerinteraktionen ein oder mehrere Benutzerschnittstellenmodule vorgeschlagen werden.

4. Verfahren nach Anspruch 2, des Weiteren umfassend das Aktualisieren eines zentralisierten Benutzerprofils als Reaktion auf die Anpassung, wobei das zentralisierte Benutzerprofil mindestens ein Benutzerschnittstellenmodul und Anpassungseinstellungen im Zusammenhang mit dem mindestens einen Benutzerschnittstellenmodul enthält.

5. Verfahren nach Anspruch 1, des Weiteren umfassend:
Bestimmen eines Orts des Benutzers; und
Anpassen von mindestens einem des einen oder der mehreren ausgewählten Benutzerschnittstellenmodule als Reaktion auf den bestimmten Ort.

6. Verfahren nach Anspruch 1, des Weiteren umfassend das Auffordern des Benutzers, das eine oder die mehreren ausgewählten Benutzerschnittstellenmodule in der ersten Plattform (702, 704, 706) zu konfigurieren, und das automatische Anwenden der Konfiguration des einen oder der mehreren ausgewählten Benutzerschnittstellenmodule in der Benutzerschnittstelle (300, 400, 500) in der zweiten Plattform (702, 704, 706).

7. Verfahren nach Anspruch 1, des Weiteren umfassend:
Anzeigen eines oder mehrerer Benutzerschnittstellenmodule in der Benutzerschnittstelle (300, 400, 500), wobei das eine oder die mehreren Module Medieninformationen enthalten;
Auffordern des Benutzers, ein zusätzliches Benutzerschnittstellenmodul auszuwählen, das der Benutzerschnittstelle (300, 400, 500) hinzugefügt werden soll;
Aktualisieren der angezeigten Benutzerschnittstelle (300, 400, 500) zum Enthalten der zusätzlichen Benutzerschnittstellenmodule;
Beobachten von Benutzerinteraktionen mit der interaktiven Medienführungsanwendung; und
Anpassen von mindestens einem der Benutzerschnittstellenmodule als Reaktion auf die beobachteten Benutzerinteraktionen.

8. Personalisierte interaktive Medienführungsanwendung für mehrere Plattformen, umfassend:
eine Benutzerschnittstelle (300, 400, 500), die in einer interaktiven Medienführungsanwendung auf einer ersten Plattform (702, 704, 706) angezeigt wird; **gekennzeichnet durch**
ein oder mehrere von einem Benutzer auswählbare Schnittstellenmodule, die in der Benutzerschnittstelle (300, 400, 500) auf der ersten Plattform (702, 704, 706) und auf einer zweiten Plattform (702, 704, 706) anzeigbar sind, wobei:
wenn die Benutzerschnittstelle auf der ersten Plattform (702, 704, 706) aktualisiert wird, um eine Benutzerauswahl zu enthalten, die auf der ersten Plattform des einen oder der mehreren Benutzerschnittstellenmodule vorgenommen wird,
die Benutzerauswahl des einen oder der mehreren Benutzerschnittstellenmodule über ein Netzwerk (714) kommuniziert wird, sodass das eine oder die mehreren ausgewählten Benutzerschnittstellenmodule angezeigt werden können, wenn auf die Benutzerschnittstelle (300, 400, 500) auf einer zweiten Plattform (702, 704, 706) zugegriffen wird.

9. Anwendung nach Anspruch 8, des Weiteren umfassend:
einen Monitor zum Beobachten von Benutzerinteraktionen mit der interaktiven Medienführungsanwendung, wobei
mindestens eines des einen oder der mehreren ausgewählten Benutzerschnittstellenmodule durch die Medienführungsanwendung als Reaktion auf die beobachteten Benutzerinteraktionen angepasst wird.

10. Anwendung nach Anspruch 9, wobei das eine oder die mehreren Benutzerschnittstellenmodule dem Benutzer durch die Medienführungsanwendung auf der Grundlage der beobachteten Benutzerinteraktionen vorgeschlagen werden.

11. Anwendung nach Anspruch 9, des Weiteren umfassend ein zentralisiertes Benutzerprofil, das als Reaktion auf die Anpassung aktualisiert wird, wobei das zentralisierte Benutzerprofil mindestens ein Benutzerschnittstellenmodul und Anpassungseinstellungen im Zusammenhang mit dem mindestens einen Benutzerschnittstellenmodul enthält.

12. Anwendung nach Anspruch 8, wobei ein Ort des Benutzers durch die Medienführungsanwendung bestimmt wird, und
mindestens eines des einen oder der mehreren ausgewählten Benutzerschnittstellenmodule als Reaktion auf den bestimmten Ort angepasst wird.

13. Anwendung nach Anspruch 8, wobei das eine oder die mehreren ausgewählten Benutzerschnittstellenmodule in der ersten Plattform (702, 704, 706) konfigurierbar sind und die Anwendung Mittel zum automatischen Anwenden der Konfiguration des einen oder der mehreren ausgewählten Benutzerschnittstellenmodule in der Benutzerschnittstelle (300, 400, 500) in der zweiten Plattform umfasst.

14. Verfahren nach Anspruch 8, des Weiteren umfassend:
ein oder mehrere Benutzerschnittstellenmodule, die in der Benutzerschnittstelle (300, 400, 500) anzeigbar sind, wobei das eine oder die mehreren Module Medieninformationen enthalten;
eine zusätzliche vom Benutzer auswählbare Schnittstelle, die ausgelegt ist, der Benutzerschnittstelle hinzugefügt zu werden;
eine Anzeige (612) zum Aktualisieren der angezeigten Benutzerschnittstelle (300, 400, 500) zum Enthalten einer Benutzerauswahl für die zusätzlichen Benutzerschnittstellenmodule; und
einen Monitor zum Beobachten von Benutzerinteraktionen mit der interaktiven Medienführungsanwendung, wobei
mindestens eines der Benutzerschnittstellenmodule als Reaktion auf die beobachteten Benutzerinteraktionen angepasst wird.

## Revendications

1. Procédé pour personnaliser une interface utilisateur (300, 400, 500) dans une application interactive de guidage multimédia à plateformes multiples, le procédé comprenant :
l'affichage de l'interface utilisateur dans une application interactive de guidage multimédia implémentée sur une première plateforme (702, 704, 706) ; **caractérisée par**
la sollicitation à un utilisateur pour sélectionner un ou plusieurs modules d'interface utilisateur destinés à être affichés à l'intérieur de l'interface utilisateur (300, 400, 500) sur la première plateforme (702, 704, 706) ;
la réception d'une sélection utilisateur du ou des modules d'interface utilisateur ;
l'actualisation de l'interface utilisateur affichée (300, 400, 500) pour inclure le ou les modules d'interface utilisateur sélectionnés ; et
la communication de la sélection utilisateur du ou des modules d'interface utilisateur sur un réseau (714) pour que le ou les modules d'interface utilisateur sélectionnés puissent être affichés à l'intérieur d'une interface utilisateur (300, 400, 500) sur une seconde plateforme.

2. Procédé selon la revendication 1, comprenant en outre :
la surveillance des interactions utilisateur avec l'application interactive de guidage multimédia ; et
la personnalisation d'au moins un du ou des modules d'interface utilisateur sélectionnés en réponse aux interactions utilisateur surveillées.

3. Procédé selon la revendication 2, dans lequel un ou plusieurs modules d'interface utilisateur sont suggérés à l'utilisateur par l'application de guidage multimédia en fonction des interactions utilisateur surveillées.

4. Procédé selon la revendication 2, comprenant en outre l'actualisation d'un profil utilisateur centralisé en réponse à la personnalisation, dans lequel le profil utilisateur centralisé comprend au moins un module d'interface utilisateur et des réglages de personnalisation associés à l'au moins un module d'interface utilisateur.

5. Procédé selon la revendication 1, comprenant en outre :
la détermination d'une localisation de l'utilisateur ; et
la personnalisation d'au moins un du ou des modules d'interface utilisateur sélectionnés en réponse à la localisation déterminée.

6. Procédé selon la revendication 1, comprenant en outre la sollicitation à l'utilisateur pour configurer le ou les modules d'interface utilisateur sélectionnés dans la première plateforme (702, 704, 706) et l'application automatique de la configuration du ou des modules d'interface utilisateur sélectionnés à l'intérieur de l'interface utilisateur (300, 400, 500) dans la seconde plateforme (702, 704, 706).

7. Procédé selon la revendication 1, comprenant en outre :
l'affichage d'un ou de plusieurs modules d'interface utilisateur dans l'interface utilisateur (300, 400, 500), dans lequel le ou les modules comprennent des informations multimédia ;
la sollicitation à l'utilisateur pour sélectionner un module d'interface utilisateur supplémentaire devant être ajouté à l'interface utilisateur (300, 400, 500) ;
l'actualisation de l'interface utilisateur affichée (300, 400, 500) pour inclure les modules d'interface utilisateur supplémentaires ;
la surveillance d'interactions utilisateur avec l'application interactive de guidage multimédia ; et
la personnalisation d'au moins un des modules d'interface utilisateur en réponse aux interactions utilisateur surveillées.

8. Application interactive personnalisée de guidage multimédia à plateformes multiples, comprenant :
une interface utilisateur (300, 400, 500) affichée dans une application interactive de guidage multimédia sur une première plateforme (702, 704, 706) ; **caractérisée par**
un ou plusieurs modules d'interface sélectionnables par utilisateur affichables à l'intérieur de l'interface utilisateur (300, 400, 500) sur la première plateforme (702, 704, 706) et sur une seconde plateforme (702, 704, 706), dans laquelle :
lorsque l'interface utilisateur sur la première plateforme (702, 704, 706) est actualisée pour inclure une sélection utilisateur réalisée sur la première plateforme du ou des modules d'interface utilisateur, la sélection utilisateur du ou des modules d'interface utilisateur est communiquée sur un réseau (714) pour que le ou les modules d'interface utilisateur sélectionnés puissent être affichés lorsque l'accès à l'interface utilisateur (300, 400, 500) est réalisé sur une seconde plateforme (702, 704, 706).

9. Application selon la revendication 8, comprenant en outre :
un appareil de surveillance pour surveiller des interactions utilisateur avec l'application interactive de guidage multimédia ; dans laquelle
au moins un du ou des modules d'interface utilisateur sélectionnés est personnalisé par l'application de guidage multimédia en réponse aux interactions utilisateur surveillées.

10. Application selon la revendication 9, dans laquelle le ou les modules d'interface utilisateur sont suggérés à l'utilisateur par l'application de guidage multimédia en fonction des interactions utilisateur surveillées.

11. Application selon la revendication 9, comprenant en outre un profil utilisateur centralisé actualisé en réponse à la personnalisation, dans laquelle le profil utilisateur centralisé comprend au moins un module d'interface utilisateur et des réglages de personnalisation associés à l'au moins un module d'interface utilisateur.

12. Application selon la revendication 8, dans laquelle une localisation de l'utilisateur est déterminée par l'application de guidage multimédia, et
au moins un du ou des modules d'interface utilisateur sélectionnés est personnalisé en réponse à la localisation déterminée.

13. Application selon la revendication 8, dans laquelle le ou les modules d'interface utilisateur sélectionnés sont configurables dans la première plateforme (702, 704, 706) et l'application comprend des moyens pour appliquer automatiquement la configuration du ou des modules d'interface utilisateur sélectionnés à l'intérieur de l'interface utilisateur (300, 400, 500) dans la seconde plateforme.

14. Application selon la revendication 8, comprenant en outre :
un ou plusieurs modules d'interface utilisateur affichables dans l'interface utilisateur (300, 400, 500), dans laquelle le ou les modules comprennent des informations multimédia ;
une interface sélectionnable par utilisateur supplémentaire adaptée pour être ajoutée à l'interface utilisateur ;
un affichage (612) pour actualiser l'interface utilisateur affichée (300, 400, 500) pour inclure une sélection utilisateur pour les modules d'interface utilisateur supplémentaires ; et
un appareil de surveillance pour surveiller des interactions utilisateur avec l'application interactive de guidage multimédia ; dans laquelle
au moins un des modules d'interface utilisateur est personnalisé en réponse aux interactions utilisateur surveillées.
